# EUROPÄISCHE PATENTANMELDUNG

(11) **EP 4 718 702 A1**
(43) Veröffentlichungstag der Anmeldung: **01.04.2026**
(21) Anmeldenummer: 25193507.8
(22) Anmeldetag: 01.08.2025
(51) Int. Cl.: H02M 3/335, B60L 9/00, B60L 50/53, B60L 3/00, B60L 58/21, H02J 1/00

(54) **ANTRIEBSSYSTEM FÜR EIN SCHIENENFAHRZEUG**

(30) Priorität: 30.09.2024 DE 102024209534
(71) Anmelder: Siemens Mobility GmbH, 80997 München (DE)
(72) Erfinder: Hassler, Stefan, 91281 Kirchenthumbach, OT Neuzirkendorf (DE)
(74) Vertreter: Siemens Patent Attorneys

(57) **Zusammenfassung**

Die Erfindung betrifft ein Antriebssystem für ein Schienenfahrzeug, wobei das Antriebssystem zumindest zwei Antriebsstromrichter mit jeweils einem Gleichspannungszwischenkreis, in welchem zumindest ein Zwischenkreiskondensator angeordnet ist, zumindest zwei Antriebsbatterien, wobei jede Antriebsbatterie einem der Antriebsstromrichter zugeordnet ist, wobei die jeweilige Antriebsbatterie über einen Gleichspannungssteller mit dem Gleichspannungszwischenkreis des zugeordneten Antriebsstromrichters verbunden ist, wobei jede Antriebsbatterie eine Mehrzahl Batteriezweige aufweist, und wobei jeder Batteriezweig mit einer Phase des Gleichspannungsstellers verbindbar ist, zumindest zwei Vorladewiderstände, wobei jedem Gleichspannungszwischenkreis ausschließlich ein Vorladewiderstand zugeordnet ist, wobei der jeweilige Vorladewiderstand in der Verbindung zwischen einem der Batteriezweige der mit dem Gleichspannungszwischenkreis verbundenen Antriebsbatterie und der diesem Batteriezweig zugeordneten Phase des Gleichspannungsstellers zuschaltbar angeordnet ist, und eine Steuereinrichtung, wobei die Steuereinrichtung ausgestaltet ist, für ein Vorladen des Zwischenkreiskondensators des jeweiligen Gleichspannungszwischenkreises bei einem Aufrüsten des Schienenfahrzeugs den Batteriezweig über den zugeschalteten Vorladewiderstand und die zugeordnete Phase des Gleichspannungsstellers mit dem Gleichspannungszwischenkreis zu verbinden, umfasst. Das Antriebssystem ist dadurch gekennzeichnet, dass zumindest zwei mit dem jeweiligen Vorladewiderstand verbindbare Batteriezweige der Antriebsbatterien mittels einer schließbaren Verbindung miteinander verbindbar sind, und dass die Steuereinrichtung ferner ausgestaltet ist, sofern der Zwischenkreiskondensator nicht von dem Batteriezweig der zugeordneten Antriebsbatterie vorladbar ist, die Verbindung zwischen den zumindest zwei Batteriezweigen zu schließen, sodass der Zwischenkreiskondensator von zumindest einem Batteriezweig einer weiteren Antriebsbatterie vorladbar ist.

## Beschreibung

Die Erfindung betrifft ein Antriebssystem für ein Schienenfahrzeug, ein Schienenfahrzeug mit zumindest einem solchen Antriebssystem, sowie ein Verfahren zum Vorladen eines Zwischenkreiskondensators eines Gleichspannungszwischenkreises eines Stromrichters eines solchen Antriebssystems.

Elektrische Antriebssysteme von Schienenfahrzeugen für die Personenbeförderung, auch als EMU (Electric Multiple Unit) bezeichnet, werden auf Strecken mit einem externen Energieversorgungsnetz üblicherweise über eine Oberleitung mit elektrischer Energie versorgt. Um einen Betrieb solcher Schienenfahrzeuge auch auf Strecken bzw. Streckenabschnitten, welche nicht über ein solches Energieversorgungsnetz verfügen, zu ermöglichen, werden diese zunehmend mit Antriebsbatterien ausgerüstet, in welchen elektrische Energie für die Versorgung des Antriebssystems des Schienenfahrzeugs gespeichert wird. Solche Schienenfahrzeuge werden auch als BEMU (Battery-Electric Multiple Unit) bezeichnet.

Das Antriebssystem des Schienenfahrzeugs umfasst beispielsweise einen oder zwei Transformatoren, welcher primärseitig über einen oder mehrere Stromabnehmer mit der Oberleitung und sekundärseitig mit zwei bzw. jeweils einen Antriebsstromrichter verbunden ist. Der Transformator wandelt die Einphasen-Wechselspannung der Oberleitung des Energieversorgungsnetzes, beispielweise 15 kV, 16.7 Hz, oder 25 kV, 50 Hz, in eine niedrigere Spannung. Der Antriebsstromrichter wandelt diese niedrigere Spannung mittels eines Gleichrichters, beispielsweise eines insbesondere steuerbaren Vierquadrantenstellers, in eine Gleichspannung eines Gleichspannungszwischenkreises des Antriebsstromrichters. Die Gleichspannung des Gleichspannungszwischenkreises wird von einem oder mehreren Wechselrichtern, beispielsweise steuerbaren Pulswechselrichtern, in eine Dreiphasen-Wechselspannung variabler Spannungshöhe und Frequenz gewandelt, mit welcher Drehstrom-Antriebsmotoren versorgt werden. In dem Gleichspannungszwischenkreis ist typischerweise ein Zwischenkreiskondensator als Energiespeicher angeordnet. Dieser kann als ein einziger Kondensator oder auch als Parallelschaltung mehrerer Kondensatoren ausgestaltet sein. Mit dem Gleichspannungszwischenkreis ist eine Antriebsbatterie über einen steuerbaren Gleichspannungssteller verbunden, welcher einer Anpassung der Spannung der Antriebsbatterie an die Spannung des Gleichspannungszwischenkreises dient, um ein Laden und Entladen der Antriebsbatterie zu steuern. Bei einem Antriebssystem mit zwei Antriebsstromrichtern ist beispielsweise jeweils eine Antriebsbatterie mit dem Gleichspannungszwischenkreis jedes der Antriebssysteme verbunden.

Die Antriebsbatterien umfassen üblicherweise mehrere Batteriezweige, welche über eine jeweilige Phase des Gleichspannungsstellers mit dem Gleichspannungszwischenkreis verbunden werden. Durch eine geeignete Steuerung der Phasen des Gleichspannungsstellers erfolgt eine Anpassung der Spannung jedes Batteriezweigs an die Spannung des Gleichspannungszwischenkreises.

Schienenfahrzeuge mit einem solchen Antriebssystem sind vorzugsweise dafür ausgestaltet, ein Aufrüsten des Schienenfahrzeugs auch durchführen zu können, wenn das Antriebssystem nicht mit dem Energieversorgungsnetz verbunden ist. In diesem Fall wird die für das Aufladen des Zwischenkreiskondensators erforderliche Energie von der mit dem Gleichspannungszwischenkreis verbundenen Antriebsbatterie bereitgestellt. Der bei einem vorhergehenden Abrüsten des Schienenfahrzeugs entladene Zwischenkreiskondensator wird dabei soweit geladen, bis an diesem die gewünschte Zwischenkreisspannung anliegt. Das Aufladen des Zwischenkreiskondensators bzw. Vorladen des Gleichspannungszwischenkreises erfolgt dabei über einen so genannten Vorladewiderstand, welcher zwischen einem der Batteriezweige und dessen Phase des Gleichspannungsstellers angeordnet ist und mittels eines so genannten Vorladeschützes zugeschaltet wird.

Sollte dieser Batteriezweig nicht verfügbar sein, beispielsweise aufgrund eines Defekts in einer Batteriezelle oder einem Batteriemodul dieses Batteriezweigs, kann der Gleichspannungszwischenkreis des Antriebsstromrichter nicht vorgeladen werden, sodass auch die weiteren Batteriezweige der Antriebsbatterie nicht mit dem Gleichspannungszwischenkreis verbunden werden können, da ansonsten ein zu starker Stromfluss von dem jeweiligen Batteriezweig in den Gleichspannungszwischenkreis eine mögliche Beschädigung von elektronischen Bauelementen insbesondere des Gleichspannungsstellers verursachen kann.

Aufgabe der Erfindung ist daher, ein sicheres Vorladen des Gleichspannungszwischenkreises bei einer Nichtverfügbarkeit des mit dem Vorladewiderstand verbundenen Batteriezweigs zu gewährleisten. Diese Aufgabe wird durch ein Antriebssystem eines Schienenfahrzeugs, ein Schienenfahrzeug sowie durch ein Verfahren mit den jeweiligen Merkmalen der unabhängigen Patentansprüche gelöst. Weiterbildungen sind in jeweiligen abhängigen Patentansprüchen angegeben.

Die Erfindung betrifft ein Antriebssystem für ein Schienenfahrzeug, wobei das Antriebssystem zumindest zwei Antriebsstromrichter mit jeweils einem Gleichspannungszwischenkreis, in welchem zumindest ein Zwischenkreiskondensator angeordnet ist, zumindest zwei Antriebsbatterien, wobei jede Antriebsbatterie einem der Antriebsstromrichter zugeordnet ist, wobei die jeweilige Antriebsbatterie über einen Gleichspannungssteller mit dem Gleichspannungszwischenkreis des zugeordneten Antriebsstromrichters verbunden ist, wobei jede Antriebsbatterie eine Mehrzahl Batteriezweige aufweist, und wobei jeder Batteriezweig mit einer Phase des Gleichspannungsstellers verbindbar ist, zumindest zwei Vorladewiderstände, wobei jedem Gleichspannungszwischenkreis ausschließlich ein Vorladewiderstand zugeordnet ist, wobei der jeweilige Vorladewiderstand in der Verbindung zwischen einem der Batteriezweige der mit dem Gleichspannungszwischenkreis verbundenen Antriebsbatterie und der diesem Batteriezweig zugeordneten Phase des Gleichspannungsstellers zuschaltbar angeordnet ist, und eine Steuereinrichtung, wobei die Steuereinrichtung ausgestaltet ist, für ein Vorladen des Zwischenkreiskondensators des jeweiligen Gleichspannungszwischenkreises bei einem Aufrüsten des Schienenfahrzeugs den Batteriezweig über den zugeschalteten Vorladewiderstand und die zugeordnete Phase des Gleichspannungsstellers mit dem Gleichspannungszwischenkreis zu verbinden, umfasst. Das Antriebssystem ist dadurch gekennzeichnet, dass zumindest zwei mit dem jeweiligen Vorladewiderstand verbindbare Batteriezweige der Antriebsbatterien mittels einer schließbaren Verbindung miteinander verbindbar sind, und dass die Steuereinrichtung ferner ausgestaltet ist, sofern der Zwischenkreiskondensator nicht von dem Batteriezweig der zugeordneten Antriebsbatterie vorladbar ist, die Verbindung zwischen den zumindest zwei Batteriezweigen zu schließen, sodass der Zwischenkreiskondensator von zumindest einem Batteriezweig einer weiteren Antriebsbatterie vorladbar ist.

Vorteilhaft wird durch die mögliche Verbindung zu einem Batteriezweig einer weiteren Antriebsbatterie des Antriebssystems eine Redundanz geschaffen, welche keine weiteren Vorladewiderstände für die einzelnen Stromrichter erfordert.

Nach einer Weiterbildung der Erfindung ist die Verbindung zwischen den Batteriezweigen der Antriebsbatterien mittels eines von der Steuereinrichtung steuerbaren Schaltschützes schließbar.

Nach einer weiteren Weiterbildung der Erfindung ist jeder Batteriezweig mit der zugeordneten Phase des Gleichspannungsstellers mittels eines von der Steuereinrichtung steuerbaren Schaltschützes verbindbar.

Nach einer weiteren Weiterbildung der Erfindung umfasst das Antriebssystem ergänzend zumindest einen Transformator, wobei jeder Antriebsstromrichter zumindest einen Gleichrichter aufweist, welcher mit einer Sekundärseite des Transformator und dem Gleichspannungszwischenkreis verbunden ist, und/oder zumindest ein Eingangsfilter, welches mit dem Gleichspannungszwischenkreis verbunden ist.

Das Antriebssystem ist vorzugsweise ausgestaltet, ergänzend zu den Antriebsbatterien mittels eines Wechselspannungs-Versorgungsnetzes und/oder eines Gleichspannungs-Versorgungsnetzes mit elektrischer Energie versorgt zu werden.

Die Erfindung betrifft ferner ein Verfahren zum Vorladen eines Zwischenkreiskondensators eines Gleichspannungszwischenkreises eines Stromrichters eines erfindungsgemäßen Antriebssystems bei einem Aufrüsten eines Schienenfahrzeugs, wobei das Verfahren die Schritte Feststellen, durch die Steuereinrichtung, dass der Zwischenkreiskondensator nicht von dem Batteriezweig der zugeordneten Antriebsbatterie vorladbar ist, Schließen, durch die Steuereinrichtung, der Verbindung zwischen zumindest dem Batteriezweig der zugeordneten Antriebsbatterie und dem Batteriezweig einer weiteren Antriebsbatterie, Zuschalten, durch die Steuereinrichtung, des Vorladewiderstands, und Steuern, durch die Steuereinrichtung, der zugeordneten Phase des Gleichspannungsstellers zum Vorladen des Zwischenkreiskondensators, umfasst.

Nach einer Weiterbildung weist das erfindungsgemäße Verfahren ergänzend die Schritte nach dem Vorladen des Zwischenkreiskondensators, Trennen, durch die Steuereinrichtung, des Vorladewiderstands von der zugeordneten Phase des Gleichspannungsstellers, Verbinden, durch die Steuereinrichtung, des Batteriezweigs der weiteren Antriebsbatterie mit der zugeordneten Phase des Gleichspannungsstellers, und Regeln, durch die Steuereinrichtung, der Spannung des Gleichspannungszwischenkreises mittels der zugeordneten Phase auf eine vorgegebene Sollspannung, auf.

Nach einer auf der vorstehenden Weiterbildung basierenden weiteren Weiterbildung weist das erfindungsgemäße Verfahren ergänzend die Schritte nach Erreichen der vorgegebenen Sollspannung, Trennen, durch die Steuereinrichtung, der Verbindung zwischen dem Batteriezweig der zugeordneten Antriebsbatterie und dem Batteriezweig der weiteren Antriebsbatterie, Schließen, durch die Steuereinrichtung, der jeweiligen Verbindung der weiteren Batteriezweige der zugeordneten Antriebsbatterie mit der jeweils zugeordneten Phase des Gleichspannungsstellers, und Regeln, durch die Steuereinrichtung, der Spannung des Gleichspannungszwischenkreises mittels der den weiteren Batteriezweigen zugeordneten Phasen des Gleichspannungsstellers, auf.

Die Erfindung betrifft schließlich ein Schienenfahrzeug umfassend zumindest ein erfindungsgemäßes Antriebssystem, wobei das Schienenfahrzeug insbesondere als ein Triebzug für den Nah-, Regional- oder Fernverkehr ausgestaltet ist.

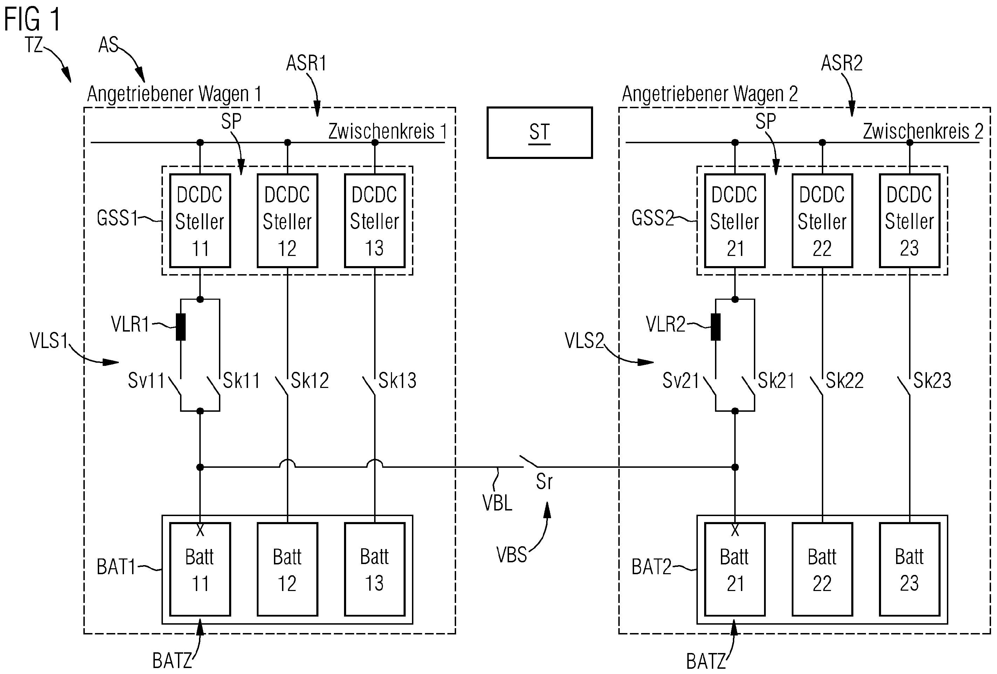

Die Erfindung wird nachfolgend anhand eines Ausführungsbeispiels beschrieben. Dabei zeigt die Figur ein Antriebssystem mit auf zwei Wagen verteilt angeordneten Komponenten.

Die Figur zeigt schematisch ein als ein Triebzug TZ für die Beförderung von Fahrgästen ausgestaltetes Schienenfahrzeug in einer Seitenansicht. Der Triebzug TZ umfasst nach der Figur lediglich zwei Wagen, welche jeweils wesentliche Komponenten des Antriebssystems AS aufweisen. Beispielhaft verfügt jeder der beiden Wagen über zumindest ein Triebdrehgestell mit einer Anzahl Antriebsmotoren, weshalb diese als angetriebene Wagen bezeichnet sind.

Jeder Wagen weist einen Antriebsstromrichter ASR1, ASR2 auf, von welchen jeweils nur der Gleichspannungszwischenkreis Zwischenkreis 1, Zwischenkreis 2 schematisch dargestellt ist. In jedem Gleichspannungszwischenkreis ist ein nicht speziell dargestellter Zwischenkreiskondensator angeordnet. Die dem jeweiligen Antriebsstromrichter ASR1, ASR2 zugeordnete Antriebsbatterie BAT1, BAT2 umfasst jeweils mehrere Batteriezweige BATZ, nach dem Beispiel der Figur jeweils drei Batteriezweige Batt 11, Batt 12, Batt 13 bzw. Batt 21, Batt 22, Batt 23. Die Batteriezweige sind jeweils mit einer Phase eines jeweiligen Gleichspannungsstellers GSS1, GSS2 verbunden, wobei die Phasen mit der entsprechenden Nummer des Batteriezweigs 11, 12, 13 bzw. 21, 22, 23 gekennzeichnet sind. In der Verbindung des jeweiligen Batteriezweigs mit der zugeordneten Phase des Gleichspannungsstellers ist ein jeweiliger steuerbarer Schalter bzw. ein jeweiliges Schütz Sk11, Sk12, Sk13 bzw. Sk21, Sk22, Sk23 angeordnet, mittels welcher die Steuereinrichtung ST des Antriebssystems AS die Verbindungen schalten kann.

In der Verbindung zwischen dem jeweils ersten Batteriezweig Batt 11, Batt 21 der Antriebsbatterien BAT1, BAT2 und der jeweils zugeordneten ersten Phase 11, 21 der Gleichspannungssteller GSS1, GSS2 ist parallel zu dem Schalter Sk11, Sk21 eine weitere Verbindung angeordnet, in welcher neben einem weiteren Schalter Sv11, Sv21 bzw. Vorladeschütz VLS1, VLS2 ein Vorladewiderstand VLR1, VLR2 angeordnet ist. Die Verbindung zwischen dem ersten Batteriezweig Batt 11, Batt 21 und der zugeordneten Phase 11, 12 kann somit entweder direkt über den Schalter Sk11, Sk21 oder über den Schalter Sv11, Sv21 sowie den Vorladewiderstand VLR1, VLR2 erfolgen, wobei der jeweilige Vorladewiderstand VLR1, VLR2 ausschließlich von der Steuereinrichtung ST zugeschaltet wird, wenn der Gleichspannungszwischenkreis bzw. dessen jeweiliger Zwischenkreiskondensator vorgeladen werden soll. Die Verbindungen zwischen dem jeweils ersten Batteriezweig und der zugeordneten Phase sind über eine Verbindungsleitung VBL mit einem darin angeordneten und von der Steuereinrichtung ST steuerbaren Schalter VBS bzw. Schütz verbindbar.

Die Figur zeigt eine Ausgangssituation an, welche beispielsweise nach einem Abrüsten des Schienenfahrzeugs TZ gegeben ist. Alle Schalter bzw. Schütze sind demnach geöffnet, sodass alle Batteriezweige 11, 12, 13 bzw. 21, 22, 23 von ihrer jeweils zugeordneten Phase 11, 12, 13 bzw. 21, 22, 23 des Gleichspannungszwischenkreises getrennt sind. Ebenfalls sind die jeweils ersten Batteriezweige Batt 11, Batt 21 voneinander getrennt, da der Schalter VBS ebenfalls geöffnet ist. Die Zwischenkreiskondensatoren der Gleichspannungszwischenkreise sind entladen.

Im Zuge des Aufrüsten des Schienenfahrzeugs TZ, wenn dessen Antriebssystem AS nicht mit einem externen Versorgungsnetz verbunden ist, sollen die Gleichspannungszwischenkreise bzw. deren Zwischenkreiskondensatoren vorgeladen werden. Ein solches Vorladen umfasst ein jeweiliges Aufladen des Zwischenkreiskondensators mit Energie aus dem jeweils ersten Batteriezweig 11, 21, bis an diesem bzw. an dem Gleichspannungszwischenkreis eine Spannung anliegt, die eine Verbindung der jeweiligen Antriebsbatterien BAT1, BAT2 mit dem Gleichspannungszwischenkreis erlaubt.

In dem Beispiel der Figur wurde von der Steuereinrichtung ST bestimmt, dass der erste Batteriezweig 11 der ersten Antriebsbatterie BAT1 nicht verfügbar ist. Dies kann beispielsweise durch eine fehlerhafte Batteriezelle oder ein fehlerhaftes Batteriemodul der Antriebsbatterie BAT1 bedingt sein. Diese Nichtverfügbarkeit ist in der Figur durch ein X in dem ersten Batteriezweig 11 angegeben. Da ausschließlich der erste Batteriezweig 11 mit dem Vorladewiderstand VLR1 über das Vorladeschütz VLS1, Sv11 verbindbar ist, könnte bei einem solchen Fehler der Gleichspannungszwischenkreis nicht vorgeladen werden, sodass in Folge die erste Antriebsbatterie BAT1 nicht mit dem Gleichspannungszwischenkreis verbindbar wäre.

Nach der Erfindung wird von der Steuereinrichtung ST in diesem Fall das Schütz VBS, Sr geschlossen sodass der erste Batteriezweig 21 der zweiten Antriebsbatterie BAT2 mit dem Vorladeschütz VLS1, Sv11 verbindbar ist. Anschließend wird von der Steuereinrichtung ST das Vorladeschütz VLS1, Sv11 geschlossen und der Zwischenkreiskondensator in dem Gleichspannungszwischenkreis des ersten Antriebsstromrichters ASR1 vorgeladen. Bei Erreichen eines bestimmten Ladezustands bzw. einer bestimmten Zwischenkreisspannung wird das Vorladeschütz VLS1, Sv11 von der Steuereinrichtung ST wieder geöffnet und der Schalter Sk11 geschlossen, um mittels der Phase 11 des von der Steuereinrichtung ST gesteuerten ersten Gleichspannungsstellers GSS1 die Zwischenkreisspannung zu regeln. Nach Erreichen der gewünschten Zwischenkreisspannung werden sowohl der Schalter Sk11 als auch das Schütz VBS, Sr wieder geöffnet.

Anschließend werden die Schalter Sk12, Sk13 von der Steuereinrichtung ST geschlossen, um die beiden weiteren Batteriezweige 12, 13 der ersten Antriebsbatterie BAT1 mit der jeweils zugeordneten Phase 12, 13 des Gleichspannungsstellers GSS1 zu verbinden. Vorzugsweise ist bei Schließen der Schalter Sk12, Sk13 die Zwischenkreisspannung größer als die jeweilige Spannung der Batteriezweige 12, 13. Mittels der Phasen 12, 13 des Gleichspannungsstellers GSS1 regelt die Steuereinrichtung ST nachfolgend die Zwischenkreisspannung.

Nachdem der erste Batteriezweig 21 der zweiten Antriebsbatterie BAT2 wieder von dem ersten Batteriezweig 11 der ersten Antriebsbatterie BAT1 getrennt ist, kann auch der Gleichspannungszwischenkreis des zweiten Antriebsstromrichters ASR2 mittels des Vorladewiderstands VLR2 vorgeladen werden. Wiederum wird bei Erreichen eines bestimmten Ladezustands bzw. einer bestimmten Zwischenkreisspannung das Vorladeschütz VLS2, Sv21 von der Steuereinrichtung ST wieder geöffnet und der Schalter Sk21 geschlossen, um mittels der Phase 21 des von der Steuereinrichtung ST gesteuerten zweiten Gleichspannungsstellers GSS2 die Zwischenkreisspannung zu regeln. Nach Erreichen der gewünschten Zwischenkreisspannung werden ergänzend die Schalter Sk22 und Sk23 geschlossen, um auch die weiteren Batteriezweige 22, 23 der zweiten Antriebsbatterie BAT2 mit der jeweils zugeordneten Phase des zweiten Gleichspannungsstellers GSS2 zu verbinden und mittels aller Phasen 21, 22, 23 die Zwischenkreisspannung des zweiten Antriebsstromrichters ASR2 zu regeln.

Um die Antriebsbatterien BAT1, BAT2 jeweils von dem Gleichspannungssteller GSS1, GSS2 zu trennen, können diese ergänzende, nicht dargestellte Schalter bzw. Schütze aufweisen. Mittels eines solchen Schützes kann der fehlerhaft erste Batteriezweig Batt 11 der ersten Antriebsbatterie BAT1 derart getrennt werden, dass die von dem ersten Batteriezweig Batt 21 der zweiten Antriebsbatterie BAT2 bereitgestellte Energie nicht in den beschädigten ersten Batteriezweig Batt 11 gespeist wird.

## Patentansprüche

1. Antriebssystem (AS) für ein Schienenfahrzeug (TZ), wobei das Antriebssystem (AS) umfasst:
- zumindest zwei Antriebsstromrichter (ASR1, ASR2) mit jeweils einem Gleichspannungszwischenkreis (Zwischenkreis 1, Zwischenkreis 2), in welchem zumindest ein Zwischenkreiskondensator angeordnet ist,
- zumindest zwei Antriebsbatterien (BAT1, BAT2), wobei jede Antriebsbatterie (BAT1, BAT2) einem der Antriebsstromrichter (ASR1, ASR2) zugeordnet ist, wobei die jeweilige Antriebsbatterie (BAT1, BAT2) über einen Gleichspannungssteller (GSS1, GSS2) mit dem Gleichspannungszwischenkreis (Zwischenkreis 1, Zwischenkreis 2) des zugeordneten Antriebsstromrichters (ASR1, ASR2) verbunden ist, wobei jede Antriebsbatterie (BAT1, BAT2) eine Mehrzahl Batteriezweige (BATZ, Batt 11, Batt 12, Batt 13, Batt 21, Batt 22, Batt 23) aufweist, und wobei jeder Batteriezweig (Batt 11, Batt 12, Batt 13, Batt 21, Batt 22, Batt 23) mit einer Phase (11, 12, 13, 21, 22, 23) des Gleichspannungsstellers (GSS1, GSS2) verbindbar ist,
- zumindest zwei Vorladewiderstände (VLR1, VLR2), wobei jedem Gleichspannungszwischenkreis (Zwischenkreis 1, Zwischenkreis 2) ausschließlich ein Vorladewiderstand (VLR1, VLR2) zugeordnet ist, wobei der jeweilige Vorladewiderstand (VLR1, VLR2) in der Verbindung zwischen einem der Batteriezweige (Batt 11, Batt 21) der mit dem Gleichspannungszwischenkreis (Zwischenkreis 1, Zwischenkreis 2) verbundenen Antriebsbatterie (BAT1, BAT2) und der diesem Batteriezweig (Batt 11, Batt 21) zugeordneten Phase (11, 21) des Gleichspannungsstellers (GSS1, GSS2) zuschaltbar angeordnet ist, und
- eine Steuereinrichtung (ST), wobei die Steuereinrichtung (ST) ausgestaltet ist, für ein Vorladen des Zwischenkreiskondensators des jeweiligen Gleichspannungszwischenkreises (Zwischenkreis 1, Zwischenkreis 2) bei einem Aufrüsten des Schienenfahrzeugs (TZ) den Batteriezweig (Batt 11, Batt 21) über den zugeschalteten Vorladewiderstand (VLR1, VLR2) und die zugeordnete Phase (11, 21) des Gleichspannungsstellers (GSS1, GSS2) mit dem Gleichspannungszwischenkreis (Zwischenkreis 1, Zwischenkreis 2) zu verbinden,
**dadurch gekennzeichnet, dass**
- zumindest zwei mit dem jeweiligen Vorladewiderstand (VLR1, VLR2) verbindbare Batteriezweige (Batt 11, Batt 21) der Antriebsbatterien (BAT1, BAT2) mittels einer schließbaren Verbindung (VBL) miteinander verbindbar sind, und
- die Steuereinrichtung (ST) ferner ausgestaltet ist, sofern der Zwischenkreiskondensator nicht von dem Batteriezweig (Batt 11, Batt 21) der zugeordneten Antriebsbatterie (BAT1, BAT2) vorladbar ist, die Verbindung (VBL) zwischen den zumindest zwei Batteriezweigen (Batt 11, Batt 21) zu schließen, sodass der Zwischenkreiskondensator von zumindest einem Batteriezweig (Batt 11, Batt 21) einer weiteren Antriebsbatterie (BAT1, BAT2) vorladbar ist.

2. Antriebssystem (AS) nach Anspruch 1, **dadurch gekennzeichnet, dass** die Verbindung (VBL) zwischen den Batteriezweigen (Batt 11, Batt 21) der Antriebsbatterien (BAT1, BAT2) mittels eines von der Steuereinrichtung (ST) steuerbaren Schaltschützes (VBS, Sr) schließbar ist.

3. Antriebssystem (AS) nach Anspruch 1 oder 2, **dadurch gekennzeichnet**, das jeder Batteriezweig (Batt 11, Batt 12, Batt 13, Batt 21, Batt 22, Batt 23) mit der zugeordneten Phase (11, 12, 13, 21, 22, 23) des Gleichspannungsstellers (GSS1, GSS2) mittels eines von der Steuereinrichtung (ST) steuerbaren Schaltschützes (Sk11, Sk12, Sk13, Sk21, Sk22, Sk23) verbindbar ist.

4. Antriebssystem (AS) nach einem der vorstehenden Ansprüche, **dadurch gekennzeichnet, dass**
das Antriebssystem (AS) ergänzend umfasst:
- zumindest einen Transformator, wobei jeder Antriebsstromrichter (ASR1, ASR2) zumindest einen Gleichrichter aufweist, welcher mit einer Sekundärseite des Transformator und dem Gleichspannungszwischenkreis (Zwischenkreis 1, Zwischenkreis 2) verbunden ist, und/oder
- zumindest ein Eingangsfilter, welches mit dem Gleichspannungszwischenkreis (Zwischenkreis 1, Zwischenkreis 2) verbunden ist.

5. Verfahren zum Vorladen eines Zwischenkreiskondensators eines Gleichspannungszwischenkreises (Zwischenkreis 1, Zwischenkreis 2) eines Stromrichters (ASR1, ASR2) eines Antriebssystems (AS) nach einem der Ansprüche 1 bis 4 bei einem Aufrüsten eines Schienenfahrzeugs (TZ), wobei das Verfahren die folgenden Schritte umfasst:
- Feststellen, durch die Steuereinrichtung (ST), dass der Zwischenkreiskondensator nicht von dem Batteriezweig (Batt 11, Batt 21) der zugeordneten Antriebsbatterie (BAT1, BAT2) vorladbar ist,
- Schließen, durch die Steuereinrichtung (ST), der Verbindung (VBL) zwischen zumindest dem Batteriezweig (Batt 11, Batt 21) der zugeordneten Antriebsbatterie (BAT1, BAT2) und dem Batteriezweig (Batt 11, Batt 21) einer weiteren Antriebsbatterie (BAT1, BAT2),
- Zuschalten, durch die Steuereinrichtung (ST), des Vorladewiderstands (VLR1, VLR2), und
- Steuern, durch die Steuereinrichtung (ST), der zugeordneten Phase (11, 21) des Gleichspannungsstellers (GSS1, GSS2) zum Vorladen des Zwischenkreiskondensators.

6. Verfahren nach Anspruch 5, **gekennzeichnet durch** die Schritte:
nach dem Vorladen des Zwischenkreiskondensators,
- Trennen, durch die Steuereinrichtung (ST), des Vorladewiderstands (VLR1, VLR2) von der zugeordneten Phase (11, 21) des Gleichspannungsstellers (GSS1, GSS2),
- Verbinden, durch die Steuereinrichtung (ST), des Batteriezweigs (Batt 11, Batt 21) der weiteren Antriebsbatterie (BAT1, BAT2) mit der zugeordneten Phase (11, 21) des Gleichspannungsstellers (GSS1, GSS2), und
- Regeln, durch die Steuereinrichtung (ST), der Spannung des
Gleichspannungszwischenkreises (Zwischenkreis 1, Zwischenkreis 2) mittels der zugeordneten Phase (11, 21) auf eine vorgegebene Sollspannung.

7. Verfahren nach Anspruch 6, **gekennzeichnet durch** die Schritte:
nach Erreichen der vorgegebenen Sollspannung,
- Trennen, durch die Steuereinrichtung (ST), der Verbindung (VBL) zwischen dem Batteriezweig (Batt 11, Batt 21) der zugeordneten Antriebsbatterie (BAT1, BAT2) und dem Batteriezweig (Batt 11, Batt 21) der weiteren Antriebsbatterie (BAT1, BAT2),
- Schließen, durch die Steuereinrichtung (ST), der jeweiligen Verbindung der weiteren Batteriezweige (Batt 12, Batt 13, Batt 22, Batt 23) der zugeordneten Antriebsbatterie (BAT1, BAT2) mit der jeweils zugeordneten Phase (12, 13, 22, 23) des Gleichspannungsstellers (GSS1, GSS2), und
- Regeln, durch die Steuereinrichtung (ST), der Spannung des
Gleichspannungszwischenkreises (Zwischenkreis 1, Zwischenkreis 2) mittels der den weiteren Batteriezweigen (Batt 12, Batt 13, Batt 22, Batt 23) zugeordneten Phasen (12, 13, 22, 23) des Gleichspannungsstellers (GSS1, GSS2).

8. Schienenfahrzeug (TZ), umfassend zumindest ein Antriebssystem (AS) nach einem der Ansprüche 1 bis 4, wobei das Schienenfahrzeug (TZ) insbesondere als ein Triebzug (TZ) für den Nah-, Regional- oder Fernverkehr ausgestaltet ist.
